# EUROPEAN PATENT APPLICATION

(11) **EP 2 075 547 A2**
(43) Date of publication of application: **01.07.2009**
(21) Application number: 08167255.2
(22) Date of filing: 22.10.2008
(51) Int. Cl.: G01C 21/36

(54) **Method and system for identifying a user's desired destination in a navigation system**

(30) Priority: 28.12.2007 GB 0725279
(71) Applicant: Trafficmaster PLC, Cranfield, Bedfordshire MK43 0TR (GB)
(72) Inventor: Barnes, Christopher M, Cranfield, Bedfordshire MK43 0TR (GB); James, William J, Cranfield, Bedfordshire MK43 0TR (GB)
(74) Representative: Jones, Keith William

(57) **Abstract**

The invention relates to a method and system for identifying a user's desired destination in a navigation system. The invention includes the steps of storing potential desired destination names in a database, providing a user with an on-board data entry device having data entry keys, receiving consecutive characters of a first portion of the user's desired destination from the data entry device, identifying potential desired destination names based upon the consecutive characters received from the data entry device, identifying invalid keys which do not represent characters of any remaining portion of the potential desired destination names, and disabling the invalid keys on the data entry device such that they cannot be selected by the user.

## Description

The present invention relates to a method and system for identifying a user's desired destination in a navigation system, particularly, but not exclusively, an automobile navigation system which has an on-board combined display / data entry device (touch screen) and an off-board central route advisory system.

In the following description the term "on-board" shall be taken to mean a location which is in the vicinity of the end user e.g. provided in the vehicle, and the term "off-board" shall be taken to mean any location which does not fall within this definition e.g. a remotely located route advisory centre which is in communication with the on-board device.

There are currently a number of widely available wholly on-board navigation systems which utilise the information obtained from Global Positioning Satellites (GPS) combined with mapping software to provide a user with information on their vehicle's geographical location. In these systems the on-board computing software uses the on-board databases to calculate a required route to the desired destination and display this to the user graphically and / or audibly.

There are also certain known navigation systems which have an on-board device which communicates with an off-board central route advisory system (CRAS) or control centre in order to provide the user with an optimal route for navigating the vehicle to a particular desired destination. An example of such a system is described in British Patent Publication No. 2408187A. Such systems have a greater flexibility than the wholly onboard systems because they can take account of variables such as real-time and historical traffic conditions etc. and provide an optimal route to the desired destination based upon the expected traffic conditions along potential routes to the destination. Typically, the onboard device of such systems will be provided with a display screen for displaying the optimal route to the user, and some form of speaker or connection to the vehicle stereo system to present spoken commands to the user. In order to satisfy consumer demands on the overall package size and user friendliness of such systems, it is very common that the display screen is also combined with a data entry device in the form of a touch screen. Touch screens which when touched at the appropriate location by the user will perform an appropriate action, are widely known. One of the most important uses of this arrangement is to enter the desired destination. However due to size, complexity and cost restraints the touch screen device is typically relatively small and the available area of the touch screen for displaying characters of the alphabet is very limited. This makes entry of the desired destination troublesome.

There have been many attempts (such as jog dials, postcode entry etc.) at overcoming this problem; however, these each have their own problems.

According to a first aspect of the present invention, there is provided a method of identifying a user's desired destination in a navigation system, the method comprising:-
storing potential desired destination names in a database;
providing the user with an on-board data entry device having data entry keys;
receiving consecutive characters of a first portion of the user's desired destination from the data entry device;
identifying potential desired destination names based upon the consecutive characters received from the data entry device;
identifying invalid keys which do not represent characters of any remaining portion of the potential desired destination names; and
disabling the invalid keys on the data entry device such that they cannot be selected by the user.

The method may comprise storing the list of potential desired destination names in an off-board server which is in wireless communication with the on-board data entry device, the off-board server comprising part of a central route advisory system capable of providing optimal route directions to the user. Optionally, the step of returning the optimal route to the user may involve calculating the optimal route based upon historical traffic conditions between the user's current location and the desired destination.

The method of identifying potential desired destinations may further comprise the step of prioritising the potential desired destination names retrieved from the database and returning the most likely of the prioritised desired destinations to the on-board data entry device for display thereon. Optionally, the most likely desired destination is displayed to the user in a best match display area and at least part of the list of the next most likely desired destinations may be displayed in a potential match list display area of the data entry device.

The step of receiving consecutive characters of the desired destination may comprise providing a delay factor between the characters being entered by the user on the on-board data entry device and the data being received. This allows the user to type a number of consecutive characters of the desired destination before the system sends this in a single packet of information to the off-board central route advisory system.

The method preferably, also comprises receiving confirmation from the user of the desired destination. Once the desired destination has been confirmed by the user, the method also preferably comprises the step of receiving the street name of the desired destination. The method preferably, also comprises receiving confirmation from the user of the street name of the desired destination. Once the street name of the desired destination has been confirmed, the method also preferably comprises the step of receiving a property descriptor for the desired destination on that street. For example, the property descriptor may comprise a house number, property name or cross street. Where the property descriptor comprises a house number, the method preferably comprises the step of displaying a numeric key pad on the data entry device and receiving the house number of the desired destination. The method preferably, also comprises receiving confirmation from the user of the property descriptor of the desired destination.

The method may comprise the step of providing navigation to an automobile, the method being capable of directing a user to drive the automobile from their current location to a desired destination along an optimal route.

The step of disabling the invalid keys on the data entry device may comprise blanking out the invalid keys to discourage pressing by a user or may alternatively comprise removing the keys from the display altogether to prevent them being pressed by the user. The step of disabling the invalid keys may comprise providing feedback to the user if they do press an invalid key to inform the user that the key pressed is invalid. This may be in the form of an audible and / or visual notification.

Optionally, the wireless communication may comprise providing wireless communication over a General Packet Radio Service (GPRS).

According to the first aspect of the present invention there is also provided a navigation system for identifying a user's destination, the navigation system comprising:-
a database of potential desired destination names;
an on-board data entry device provided with data entry keys;
the system being capable of identifying potential desired destination names based upon consecutive characters input into the data entry device by a user;
wherein the system is further capable of identifying invalid keys which do not represent characters of the remaining portion of the destination name; and
disabling the invalid keys on the data entry device as the desired destination is input by the user.

The database of potential desired destination names may be stored in an off-board server which is in wireless communication with the on-board data entry device, the off-board server comprising part of a central route advisory system capable of providing optimal route directions to the user.

Optionally, the off-board server and the on-board data entry device are provided with wireless communication means there between. The wireless communication means may utilise General Packet Radio Service (GPRS).

Preferably, the data entry keys comprise graphical representations of a key pad on a touch screen, each key of the key pad representing characters of the alphabet. Preferably, each key of the key pad represents a plurality of characters of the alphabet.

Optionally, the database is adapted to prioritise the identified potential desired destination names retrieved from the database and return the most likely of the prioritised desired destinations to the on-board data entry device for display thereon. Preferably, the data entry device is a combined data entry and display device, such as a touch screen. Optionally the combined data entry device comprises a best match display area and, typically also a potential match list display area.

According to a second aspect of the present invention there is provided a method of prioritising potential desired destination information returned to a user in response to a user input, the method comprising:-
storing a database of potential desired destinations;
retrieving from the database potential desired destinations and prioritising the potential desired destinations according to at least a prioritisation rule; receiving consecutive characters of the destination desired by a user from an on-board data entry device;
identifying potential desired destination names based upon the consecutive characters input into the data entry device; and
returning at least a potential desired destination with the highest priority of the potential desired destinations to the on-board data entry device.

The step of storing the potential desired destinations on a database may comprise storing the potential desired destinations in a General Lookup Facility which is in communication with a Central Route Advisory System.

The or each prioritisation rule may order the potential desired destinations retrieved from the database by order of settlement population, quantity of named streets in a given settlement, distance from the user's current location, most often selected destination, current or most recent user / vehicle heading etc. Optionally, the prioritisation rule may involve ordering the potential desired destinations retrieved from the database by order of a combination of these variables.

The step of applying the prioritisation rule to the potential desired destinations retrieved from the database may include the step of dynamically adjusting the ordering of the potential desired destinations by applying real-time statistical information thereto. Optionally the real-time statistical information comprises selection frequency information compiled from user desired destination requests. Alternatively, or additionally, the real-time statistical information may comprise information on current events in the local vicinity.

The step of applying the prioritisation rule may further comprise altering the criteria of the prioritisation rule dependent upon the currently determined location of the vehicle.

Optionally, the prioritisation rules are applied in a hierarchy determined at the central route advisory system. Alternatively, the user may choose how the prioritisation rules are applied by choosing which prioritisation rules take precedence over others. This may comprise allowing the user to select precedence of alphabetical prioritisation of potential desired destinations. Preferably, this option is displayed to the user on the data-entry device in a user friendly format such as a menu screen.

Preferably, the step of returning the or each potential desired destination to the on-board data entry device further comprises returning the single most likely desired destination for display in a first display area of the on board data entry device and a list of the next most likely desired destinations for display in a second area of the on board data entry device. The first and second display areas may be presented to the user as a single integrated display area.

According to the second aspect of the present invention there is also provided a prioritisation system for returning prioritised potential desired destination information to a user in response to a user input, the system comprising:-
a database of potential desired destinations;
an on-board data entry device provided with data entry keys;
wherein, the system is capable of arranging the list of potential
desired destinations in an order of priority based upon a prioritisation rule and returning at least a potential desired destination with the highest priority of the potential desired destinations to the on-board data entry device upon receiving consecutive characters of the destination desired by a user from an on-board data entry device.

The database may comprise a General Lookup Facility which is in wireless communication with a Central Route Advisory system. Optionally, the wireless communication may be provided by General Packet Radio Service (GPRS).

The prioritisation rule may involve ordering the potential desired destinations retrieved from the database by order of one of each settlement population, quantity of named streets in a given settlement, distance from the user's current location, most often selected destination etc. Optionally, the prioritisation rule may involve ordering the potential desired destinations retrieved from the database by order of a combination of these variables.

The step of applying the prioritisation rule to the potential desired destinations in the database may include the step of dynamically adjusting the ordering of the potential desired destinations by applying real-time statistical information thereto. Optionally, the real-time statistical information comprises selection frequency information compiled from user desired destination requests. Alternatively, or additionally, the real-time statistical information may comprise information on current events in the local vicinity.

The step of applying the prioritisation rule may further comprise altering the criteria of the prioritisation rule dependent upon the currently determined location of the vehicle.

Optionally, the prioritisation rules are applied in a hierarchy determined at the central route advisory system. Alternatively, the user may choose which prioritisation rules take precedence.

Preferably, the step of returning the or each potential desired destination to the on-board data entry device further comprises returning the single most likely desired destination for display in a first display area of the on board data entry device and a list of the next most likely desired destinations for display in a second area of the on board data entry device.

The invention will now be described, by way of example only, with reference to the accompanying drawings, in which:-
Fig.1A is an illustration of a user interface at a first data entry step according to the first and second aspects of the invention;
Fig.1B is an illustration of a user interface at a second data entry step according to the first and second aspects of the invention;
Fig.1C is an illustration of a user interface at a third data entry step according to the first and second aspects of the invention;
Fig.1 D is an illustration of a user interface at the fourth data entry step according to the first and second aspects of the invention;
Fig.1 E is an illustration of a user interface at the destination confirmation step according to the first and second aspects of the invention;
Fig. 2 is a schematic flowchart illustrating the sequence of address entry steps taken by the user in the address entry mode according to the first aspect of the present invention;
Fig. 3 is a schematic flowchart illustrating the relationship between the on-board device and the database according to the second aspect of the present invention;
Fig. 4 is a schematic flowchart illustrating the relationship between a touch screen and the on-board device of the navigation system according to the second aspect of the present invention.

Embodiments of the invention described subsequently are described with reference to a route guidance system having an on-board unit with a route display device, and an off-board central route advisory system which are in communication with each other in order to provide optimal route directions to a user dependent upon traffic conditions along the potential routes between the user's current location and the desired destination. Such a system is described in British Patent Publication No. 2408187A, the relevant contents of which are incorporated herein by reference.

In the present invention, when a user wishes to enter the desired destination into the touch screen of such an on-board device he has five options as follows:-
1. Enter the postcode of the desired destination;
2. Choose a preset destination that has been previously set up either through a user website or by a human operator at a call centre;
3. Choose a recently selected destination;
4. Contact the control centre, where a human operator can search for a destination and send it to the on-board device; or
5. Enter the address of the desired destination when the post-code of the desired destination is unknown to the user.

The present invention is primarily concerned with the provision of option 5. In certain currently available systems, when the postcode is unknown to the user he must telephone the human operator at the central route advisory centre and request the destination data to be sent to the on-board device. In such instances supplying a route to a user is expensive relative to other methods because it demands a human operator's time.

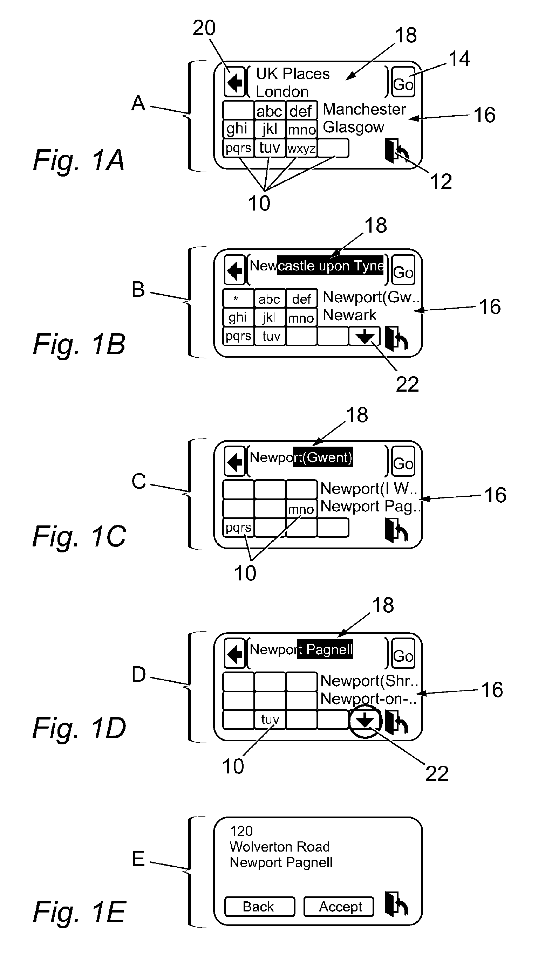

When the user wishes to enter a desired destination he will be presented with a display on the on-board data entry device (touch screen) which effectively gives him the option of entering the destination using one of the options 1 to 5 described above. With reference to Fig. 1A, assuming the user chooses to proceed with option 5, he is presented with screen A.

Screen A of the touch screen displays a matrix of data entry keys 10, an exit key 12, a request key 14, a potential match list display area 16, a best match display area 18 and a back key 20.

Each of the data entry keys 10 have characters of the alphabet displayed thereon. In the embodiment shown there are three or four characters on each key, although the number of characters on each key could easily be changed as required. In this regard, the term "characters" is intended to include any alphanumerical entity including alphanumerical entities found in languages other than English.
In screen A, since the user has not started entering the name of the desired destination, the display areas 18 and 16 simply list the largest cities in the country as a default.

The user begins to enter the address of the desired destination by pressing the appropriate data entry keys 10. As the user does this, the display blanks out any of the keys 10 which become invalid. For example, if the user's desired destination is "120 Wolverton Road, Newport Pagnell", he would start by pressing the relevant keys 10 on the data entry device to begin spelling "Newport Pagnell". This is done by pressing the key for N, then for the E, and so on. The system will start to narrow down the places that have names beginning with M, N or O and who's second letter is also D, E or F. With each letter pressed the system predicts the possible town names, and will disable any of the keys 10 which are no longer deemed an option if they cannot form the remaining part of the destination name. As shown in Fig. 1 B, on screen B, in the above example, after entering the W the system has blanked out the WXYZ key as an invalid option, since it considers that there are no town names spelt "NEW.." followed by the characters W X Y or Z in the geographical region of interest (which, in this example, is the United Kingdom). This helps guide the user towards a valid entry. If the user makes a mistake while typing, he can press the back key 20 to delete the most recent key press.

As the user enters each letter of the desired destination, the touch screen displays what it considers to be the most likely desired destination in the best match display area 18. At the same time, the touch screen displays which it considers to be the next most likely desired destinations in the potential match list display area 16. As shown in Fig. 1 B, in the example shown, the system considers Newport and Newark to be the next most likely desired destinations after Newcastle. If the name of the destination desired by the user appears in either area 18 or area 16, the user can select this as the desired destination by pressing and holding their finger on the name.

In the example shown "Newport Pagnell" appears as the third most likely desired destination after the characters "New" have been entered. When the system has narrowed down the list of potential desired destinations to a short enough list, a scroll key 22 will appear on the touch screen. This scroll key 22 can be pressed to scroll through the list of potential desired destinations.

Alternatively (as shown in screens C and D of Fig. 1C and 1D), the user can continue to key in the name of the desired destination without waiting for the touch screen to update. Once the user has entered as much of the destination name as he desires, the characters entered are sent in a single package of information and the touch screen updates accordingly to display the appropriate potential desired destination. Once the users sees the desired destination on the touch screen he can press on the name and hold it to select.

It should be noted that the system continues to blank out invalid keys as the remaining portion of the destination is entered by the user. For example, in Fig. 1D, only a single key 10 remains a possible option at this stage.

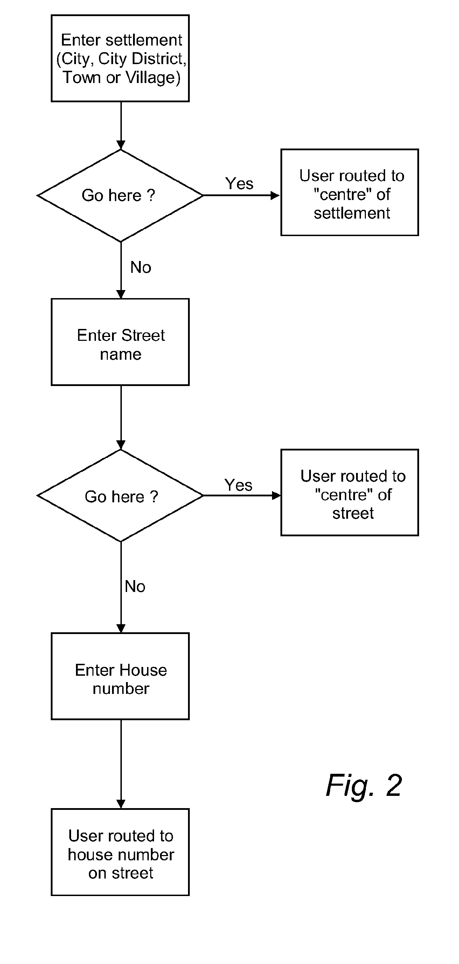

As illustrated in Fig. 2, having selected the town name of the desired destination the user is then invited to enter the street name of the desired destination in the same way. Once the street name of the desired destination has been entered, the touch screen automatically displays a numeric key pad which allows the user to easily enter the property descriptor (in this case the house number) of the desired destination. Once the user has entered the town, street, and house number for the desired destination, he can select this as the desired destination by pressing the request key 14. Alternatively, if the user does not wish to go to a specific address and would just like to be directed to the centre of a town or street, he can simply press the request key 14 once the desired town or street has been selected.

The touch screen will then typically display a screen asking the user to confirm if the address displayed is correct as shown in screen E of Fig 1 E. The user then presses the accept key and the system will provide the optimal route to the desired destination in a known manner.

Another advantage of the above described system is that it assists users when they are unsure of the precise spelling of a desired destination because the system actually suggests potential destinations based only on the initial few characters of the destination name.

The example above describes the interface between the user and the navigation system. The architecture and logic of the system which enables the above described operation will now be described.

In the following description, the on-board device comprises a data entry device in the form of a Small Display Option (SDO) connected to an In-Vehicle Unit (IVU). The IVU and SDO are provided on-board the automobile and communicate with each other to act as an interface between the user and the off-board portion of the navigation system.

It should be noted that the numbers of the steps of the following diagrams do not imply any chronological order in which the steps are carried out; rather they merely provide a means of labelling each step of the process to improve clarity and conciseness in the description.

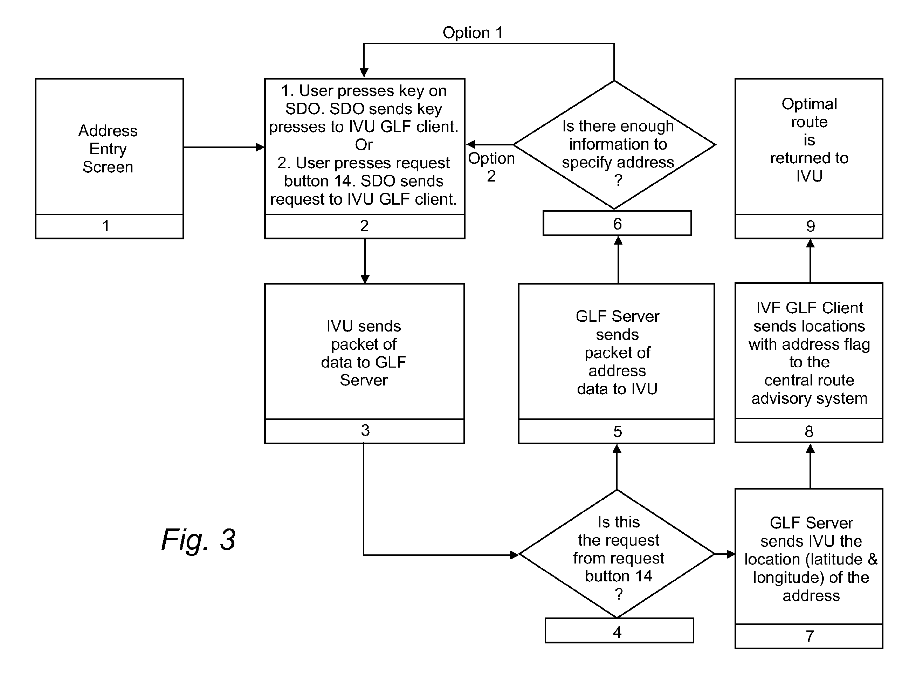

Referring to Fig. 3, the relationship between the on-board IVU and a database of the off-board system is described.

First the user navigates his way through typical menu options on the SDO touch screen menu options until he reaches the address entry screen as represented by box 1 of the flow chart. The user then has the option of selecting the request key 14 (Fig. 1A) if the desired location happens to be displayed as a default in the best match display area 18 (in other words, if London is the desired destination, it may already be listed as a default best match without the user having to enter any destination data). Alternatively, the user has the option of pressing consecutive keys 10 on the SDO in order to begin spelling the address of the desired destination. These alternative options are represented by box 2.

An on-board General Lookup Facility (GLF) client of the IVU receives the output from the SDO at box 2 and sends this to a General Lookup Facility (GLF) server which is located with, but separate from, the CRAS. The GLF server stores each of the potential desired destination names. Clearly since this step involves sending a packet of information from the on-board portion of the system to the off-board portion of the system some form of wireless communication means must exist between these two parts of the system. Any suitable wireless communication system may be used here, for example the General Packet Radio Service (GPRS). This step is represented by box 3.

In one embodiment of the invention, the packet of information sent by the GLF client to the GLF server in step 3 only contains data representative of the most recent key pressed, and the subsequent steps are concerned with retrieving further address information for the purpose of narrowing the possible options of desired destinations. However, depending upon the system architecture, it is preferable to send information representing all sequentially pressed keys from the start of the name each time another key in the sequence is pressed. This has the advantage of removing the need for the GLF server to retain any information about which previous keys have been pressed. This allows multiple servers to share load and also gives a degree of in-built redundancy in the system since the requests from the GLF client can be sent to any GLF server each time. To assist with this the system may be factored with a time-delay between steps 2 and 3. With such a time-delay factor, if the user rapidly enters successive characters of the desired destination into the SDO, the GLF client of the IVU will send a single package of information to the GLF server containing information representing each of the keys pressed. Another advantage of this arrangement is that the system is more efficient for the user and the service provider since the amount of time spent entering and transmitting, as well as the cost of transmitting the address information is reduced.

If the GLF server of the CRAS ascertains (box 4) that request key 14 was not pressed it proceeds with obtaining a packet of address data from its database of potential desired destinations and returns this packet of data to the GLF client of the IVU. This action is represented by box 5. Again, since this step involves sending a packet of information from the off-board portion of the system to the on-board portion of the system some form of wireless communication means (such as GPRS) must exist between these two parts of the system.

Upon receiving the package of address information from the GLF client of the IVU, the SDO displays this address information to the user and the user then makes a decision as to whether there is enough information to confirm the address of the desired destination. This is represented by box 6. Based on this decision, the user will then choose option 1 or 2 of box 2. This iterative process continues until the request key 14 is pressed by the user.

In the embodiment described, once the request key 14 has been pressed by the user, at box 7, the GLF server sends the GLF client of the IVU the location data (such as latitude and longitude) of the desired destination. Again, this may be sent over a GPRS network.

Upon receiving the location data, the GLF client of the IVU then sends the location data to the CRAS (box 8) as a desired destination request. The CRAS then returns the optimal route to the IVU (box 9) in a known manner (such as the manner described in British Patent Publication No. 2408187A).

Alternatively, instead of the GLF server sending the GLF client of the IVU the location data as described above, the location data can remain with the GLF server once identified. In this alternative, the GLF server and the CRAS communicate with one another such that the CRAS possesses the location data. The GLF client of the IVU can then request the location data directly from the CRAS.

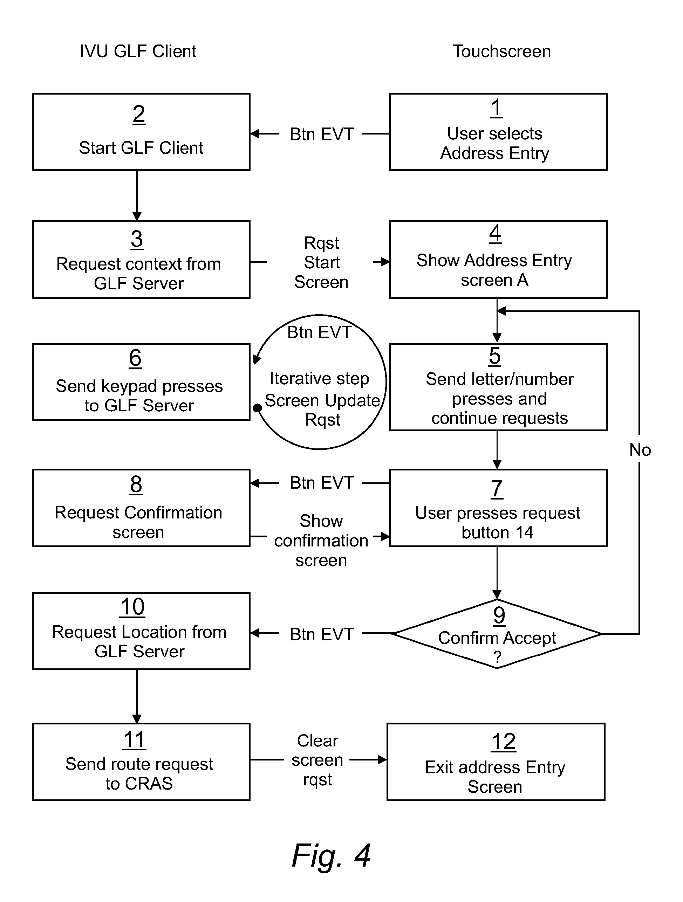

Referring to Fig. 4, the relationship between the on-board SDO (touch screen) and GLF client of the IVU and the off-board GLF server will now be described.

As the user selects the address entry screen (box 1), the GLF client of the IVU is started (box 2). The GLF client first requests the address context from the GLF server (box 3) and then instructs the SDO to display the address entry screen A (box 4). In boxes 5 and 6, the user then begins to key in the address of the desired destination in the iterative process described above with reference to Fig. 3. Once the request key 14 has been pressed on the SDO, the GLF client of the IVU provides a confirmation screen E (Fig. 1 E) on the SDO in boxes 7 and 8. Assuming the user confirms acceptance on the SDO, the GLF client of the IVU then requests the location information from the GLF server (box 10). Upon receipt of the location information, the GLF client sends this in the form of a route request to the CRAS (box 11).

In the embodiment described, the GLF server of the CRAS is a stand-alone program which provides address data to the GLF client of the IVU. In a preferred embodiment of the invention, the GLF server is configured to prioritise the address data retrieved from its database in order to allow it to return prioritised potential desired destinations to the GLF client of the IVU. This may be done by applying certain prioritisation rules to entries retrieved from the GLF server database.

The prioritisation rules result in the data retrieved from the GLF server database being ordered according to the required application of the data.

A non-exhaustive list of example applications which may be required are as follows:-
- Population
   The prioritisation rule sorts the entries retrieved from the GLF server database by order of settlement size where settlements are, for example, ordered in descending order of "size". The "size" of the settlement may be classified in the database in terms of number of streets in the settlement or on the total recorded population of the settlement.
   Street names should also be listed in descending order of size, i.e. those with the most number of houses on the street should be listed first.
   As well as proper city names such as London, Manchester etc. the GLF server database may include information on the names of districts within those cities e.g. Westminster. Furthermore, the street name may be linked with the district in order to enable a user to request a route to the centre of the district or enter a street within the district. This reduces the potential for routing to an identically named street in the wrong district of a particular city in cases where there are a number of similarly named roads in that city. In this regard, when the system request the user to confirm that the destination is correct, it may also display the first part of the postcode (or any other data capable of enabling the user to distinguish between different places with similar names e.g. county) to help the user distinguish between settlements with similar or identical names. For example, a user entering "St lves" would be presented with "St Ives (TR27)", "St Ives (PE27)", "St Ives (BH24)" as potential desired destinations.
- User Favourites
   The prioritisation rule sorts the entries retrieved from the GLF server by order of the destinations most recently selected by that user. The most recent destination selected can be saved and displayed as an initial potential destination, whereby pressing any key would remove this initial suggestion and allow normal data entry. Indeed, a number of previously listed settlements could be displayed initially in order to minimise the number of keys presses required by the user.
- Points of Interest (POIs)
   The prioritisation rule sorts the entries retrieved from the GLF server by order of most popular POls or attractions. This is provided by a menu tree for the POls to narrow down potential matches before entering the address search. For example, a user could select "Transport", then "Train Stations" before entering a town name to find its railway station.
   This could be also be used to sort the entries by order of nearest services such as the nearest petrol station.
- Location
   The prioritisation rule sorts the entries retrieved from the GLF server by order of distance from the user's currently declared location. This would be especially useful for particular categories of customers e.g. minicab drivers.
- Current Events
   The prioritisation rule sorts the entries retrieved from the GLF server by order of most popular current events in the local vicinity.
- User Category

The prioritisation rule sorts the entries retrieved from the GLF server into sub categories dependent upon the declared category of user. For example, the results could be prioritised into the most likely based upon the most commonly search destinations by a particular category of user. A "category" of user could include members of a particular company's fleet of users.

In one embodiment of the invention it may be desirable to provide a feedback loop between the GLF client of the IVU and the GLF server, whereby real time statistical information on the frequency of requests from particular users / categories of users, at particular dates and times etc. is collated and applied to the prioritisation rules in order to dynamically adjust the results returned by the prioritisation rules and hence the GLF server in a particular desired destination request event.

Modifications and improvements may be made to the foregoing, without departing from the scope of the invention, for example:-

The system could be easily adapted to provide routing to an intersection of two streets in a given settlement, This would be useful in, for example, cities which have streets laid out in a grid pattern. One way in which this could be achieved would be by providing the option of entering the name of each intersecting street as separate address entries and then collating these to find the point of intersection.

The system may be set up to allow a degree of personalisation whereby an individual can set the default start-up screen on the SDO when using the address entry option. For example, a delivery driver in Birmingham may want to skip entering "Birmingham" and have their touch screen default to streets in Birmingham. In case the driver requires to travel to a destination outside of Birmingham he would simply need to press the back key and then enter the settlement name as normal.

It can be seen that the above described system supports the identification of any hierarchically categorised list of desired destinations. In this regard, the system may be arranged such that the desired destination names comprise POls, destinations from a range of countries or postcodes whereby post code entry (or partial post code entry e.g. just the first X characters of the postcode) may be utilised. In this arrangement, the system would identify the desired destination from the potential list of desired destination post codes. For example, the user would enter a full post code and then use this to find the exact property number / name i.e. after entering "MK43" the user may continue to enter a street name and optionally the property descriptor in order to select the desired destination.

## Claims

1. A method of identifying a user's desired destination in a navigation system, the method comprising:-
storing potential desired destination names in a database;
providing the user with an on-board data entry device having data entry keys;
receiving consecutive characters of a first portion of the user's desired destination from the data entry device;
identifying potential desired destination names based upon the consecutive characters received from the data entry device;
identifying invalid keys which do not represent characters of any remaining portion of the potential desired destination names; and
disabling the invalid keys on the data entry device such that they cannot be selected by the user.

2. A method according to claim 1, further comprising storing the list of potential desired destination names in an off-board server which is in wireless communication with the on-board data entry device.

3. A method according to claim 2, further comprising providing the off-board server as part of a central route advisory system capable of providing optimal route directions to the user.

4. A method according to claim 3, wherein the step of returning the optimal route to the user further comprises calculating the optimal route based upon historical traffic conditions between the user's current location and the desired destination.

5. A method according to any preceding claim, wherein the step of identifying potential desired destinations further comprises the step of prioritising the potential desired destination names retrieved from the database and returning the most likely of the prioritised desired destinations to the on-board data entry device for display thereon and
wherein the most likely desired destination is displayed to the user in a best match display area and at least part of the list of the next most likely desired destinations is displayed in a potential match list display area of the data entry device.

6. A method of any preceding claim, wherein the step of receiving consecutive characters of the desired destination further comprises providing a delay factor between the characters being entered by the user on the on-board data entry device and the data being received.

7. A method according to any preceding claim, further comprising receiving confirmation from the user of the desired destination and
wherein once the desired destination has been confirmed by the user, the method also comprises the step of receiving the street name of the desired destination and further comprises receiving confirmation from the user of the street name of the desired destination and wherein once the street name of the desired destination has been confirmed, the method also comprises the step of receiving a property descriptor for the desired destination on that street.

8. A method according to claim 7, wherein when the property descriptor comprises a house number, the method comprises the step of displaying a numeric key pad on the data entry device and receiving the house number of the desired destination and wherein and further comprises receiving confirmation from the user of the property descriptor of the desired destination.

9. A method according to any preceding claim, wherein the step of disabling the invalid keys on the data entry device comprises one of blanking out the invalid keys to discourage pressing by a user or removing the keys from the display altogether to prevent them being pressed by the user.

10. A navigation system for identifying a user's destination, the navigation system comprising:-
a database of potential desired destination names;
an on-board data entry device provided with data entry keys;
the system being capable of identifying potential desired destination names based upon consecutive characters input into the data entry device by a user;
wherein the system is further capable of identifying invalid keys which do not represent characters of the remaining portion of the destination name; and
disabling the invalid keys on the data entry device as the desired destination is input by the user.

11. A navigation system according to claim 10, wherein the database of potential desired destination names is stored in an off-board server which is in wireless communication with the on-board data entry device, the off-board server comprising part of a central route advisory system capable of providing optimal route directions to the user.

12. A navigation system according to either of claims 10 or 11, wherein the data entry keys comprise graphical representations of a key pad on a touch screen, each key of the key pad representing characters or a plurality of characters of the alphabet.

13. A navigation system according to claims 10 to 12, wherein the system prioritises the identified potential desired destination names retrieved from the database and returns the most likely of the prioritised desired destinations to the on-board data entry device for display thereon.

14. A navigation system according to claims 10 to 13, wherein the data entry device is a combined data entry and display device, such as a touch screen and wherein the combined data entry device comprises a best match display area and a potential match list display area.

15. A method of prioritising potential desired destination information returned to a user in response to a user input, the method comprising:-
storing a database of potential desired destinations;
retrieving from the database potential desired destinations and prioritising the potential desired destinations according to at least a prioritisation rule; receiving consecutive characters of the destination desired by a user from an on-board data entry device;
identifying potential desired destination names based upon the consecutive characters input into the data entry device; and
returning at least a potential desired destination with the highest priority of the potential desired destinations to the on-board data entry device.

16. A method according to claim 15, wherein the step of storing the potential desired destinations on a database further comprises storing the potential desired destinations in a General Lookup Facility which is in communication with a Central Route Advisory System.

17. A method according to either of claims 15 or 16, wherein the or each prioritisation rule orders the potential desired destinations retrieved from the database by order of at least one of settlement population, quantity of named streets in a given settlement, distance from the user's current location, most often selected destination, current or most recent user and vehicle heading and wherein the prioritisation rule involves ordering the potential desired destinations retrieved from the database by order of a combination of these variables.

18. A method according to any of claims 15 to 17, wherein the step of applying the prioritisation rule to the potential desired destinations retrieved from the database includes the step of dynamically adjusting the ordering of the potential desired destinations by applying real-time statistical information thereto, the real-time statistical information comprising at least one of selection frequency information compiled from user desired destination requests or information on current events in the local vicinity.

19. A method according to any of claims 15 to 18, wherein the step of applying the prioritisation rule further comprises altering the criteria of the prioritisation rule dependent upon the currently determined location of the vehicle.

20. A method according to any of claims 15 to 19, wherein the prioritisation rules are either applied in a hierarchy determined at the central route advisory system or chosen by the user.

21. A method according to any of claims 15 to 20, wherein the step of returning the or each potential desired destination to the on-board data entry device further comprises returning the single most likely desired destination for display in a first display area of the on board data entry device and a list of the next most likely desired destinations for display in a second area of the on board data entry device.

22. A prioritisation system for returning prioritised potential desired destination information to a user in response to a user input, the system comprising:-
a database of potential desired destinations;
an on-board data entry device provided with data entry keys;
wherein, the system is capable of arranging the list of potential
desired destinations in an order of priority based upon a prioritisation rule and returning at least a potential desired destination with the highest priority of the potential desired destinations to the on-board data entry device upon receiving consecutive characters of the destination desired by a user from an on-board data entry device.

23. A prioritisation system according to claim 22, wherein the database comprises a General Lookup Facility in wireless communication with a Central Route Advisory system.

24. A prioritisation system according to either of claims 22 or 23, wherein the prioritisation rule involves ordering the potential desired destinations retrieved from the database by order at least one of each settlement population, quantity of named streets in a given settlement, distance from the user's current location and most often selected destination and
wherein the prioritisation rule involves ordering the potential desire destinations retrieved from the database by order of a combination of these variables.

25. A prioritisation system according to claims 22 to 24, wherein the step of applying the prioritisation rule to the potential desired destinations in the database includes the step of dynamically adjusting the ordering of the potential desired destinations by applying real-time statistical information thereto, the real-time statistical information comprising at least one of selection frequency information compiled from user desired destination request or information on current events in the local vicinity.

26. A prioritisation system according to claims 22 to 25, wherein the step of applying the prioritisation rule further comprises altering the criteria of the prioritisation rule dependent upon the currently determined location of the vehicle.

27. A prioritisation system according to claims 22 to 26, wherein the prioritisation rules are applied in a hierarchy determined at the central route advisory system or chosen by the user.

28. A prioritisation system according to claims 22 to 27, wherein the step of returning the or each potential desired destination to the on-board data entry device further comprises returning the single most likely desired destination for display in a first display area of the on board data entry device and a list of the next most likely desired destinations for display in a second area of the on board data entry device.
